# EUROPÄISCHE PATENTSCHRIFT

(11) **EP 2 907 429 B1**
(45) Veröffentlichungstag und Bekanntmachung des Hinweises auf die Patenterteilung: **28.03.2018**
(21) Anmeldenummer: 15155012.6
(22) Anmeldetag: 13.02.2015
(51) Int. Cl.: A47J 31/44

(54) **Getränkemaschine**
Drinks machine
Machine à boissons

(30) Priorität: 14.02.2014 DE 202014100649 U
(43) Veröffentlichungstag der Anmeldung: 19.08.2015
(73) Patentinhaber: Melitta Professional Coffee Solutions GmbH & Co. KG, 32429 Minden (DE)
(72) Erfinder: Buchholz, Bernd, 32369 Rahden (DE); Hallmann, Kai, 32423 Minden (DE)
(74) Vertreter: Specht, Peter

(56) Entgegenhaltungen:
- EP-A1- 1 639 926
- EP-A1- 1 656 863
- EP-A2- 2 478 805
- EP-B1- 1 745 726
- WO-A1-2004/023949
- US-A- 6 082 246

## Beschreibung

Die vorliegende Erfindung betrifft eine Getränkemaschine, insbesondere eine Heißgetränkemaschine, vorzugsweise einen Kaffeevollautomaten, mit einer Auslaufhöhen-Verstellvorrichtung nach den Oberbegriffen der Ansprüche 1 und 2 und ein Verfahren nach dem Oberbegriff des Anspruchs 11.

In der US 6 082 246 A wird eine Getränkemaschine offenbart, welche einen Elektromotor zum Bewegen der Auslaufvorrichtung nutzt. Dieser Elektromotor ist elektrisch aktuierbar. Eine ähnliche Technologie wird in der EP 1 745 726 A1 offenbart. Hier dient ein Auf-/Ab-Schalter 26 zum Betätigen des Antriebsmotors. Schließlich ist in diesem Kontext die WO 2004/023949 A1 zu nennen. Bei dieser Druckschrift wird auf ein Höhensignal hin eine Fülleinrichtung auf eine voreinstellbare Füllhöhe voreingestellt.

Aus dem Stand der Technik sind automatische Auslaufhöhen-Verstellvorrichtungen für Getränkemaschinen bekannt, mit welchen eine gewünschte vorzugebende oder gespeicherte Position automatisch angefahren wird. Es sind auch Lösungen bekannt, bei der die gewünschte Position durch Sensoren ermittelt und dann angefahren wird, so dass der Verfahrweg sensorisch überwacht wird. Ein wesentliches Merkmal einer automatischen Auslaufhöhen-Verstellvorrichtung ist ein Antrieb, der z.B. durch einen Elektromotor und ein Getriebe gebildet wird. Den bekannten Konzepten ist gemeinsam, dass bei der Bedienung einer Getränkemaschine eine automatische Funktion abläuft, die bei damit nicht erfahrenen Bedienern - z.B. im Selbstbedienungsbetrieb einer Getränkemaschine - den Bediener irritieren kann, was wiederum in einer Fehlbedienung der Getränkemaschine resultieren kann.

Aus dem Stand der Technik sind darüber hinaus auch manuell zu bedienende Auslaufhöhen-Verstellvorrichtungen für Getränkemaschinen bekannt. Bei diesen Verstelleinrichtungen wird die Auslaufvorrichtung einer Getränkemaschine vom Bediener auf eine gewünschte Position über einem bereitgestellten Gefäß, wie z.B. eine Tasse eingestellt. Die Bedienung einer solchen manuellen Auslaufhöhen-Verstellvorrichtung ist auf Grund der vorhandenen haptischen Rückmeldung an den Bediener zunächst sicherer und unproblematischer.

Nachteilig an einer manuellen Bedienung einer Auslaufhöhen-Verstellvorrichtung für eine Getränkemaschine ist aber, dass z.B. durch eine systembedingte Schwergängigkeit der Bewegung der Auslaufhöhen-Verstellvorrichtung z.B. durch Überwindung der Haftreibung zu Beginn des Verstellvorgangs bzw. verhältnismäßig hohe Reibwiderstände in der Führung der Auslaufhöhen-Verstellvorrichtung eine leichte Verstellung oftmals nur schwer zu realisieren ist. Ebenso ist das sichere Halten der Auslaufvorrichtung an der gewünschten Position bei gleichzeitiger Verstellbarkeit der Auslaufhöhe mit möglichst geringem Kraftaufwand technisch nicht einfach zu realisieren. Die technische Realisierung von derart widersprechenden Anforderungen führt zu meist nicht befriedigenden Kompromisslösungen.

Die Erfindung hat deshalb die Aufgabe, die Probleme des bekannten Standes der Technik möglichst weitgehend zu beheben.

Die vorliegende Erfindung löst dieses Problem durch den Gegenstand des Anspruchs 1.

Geschaffen wird demnach eine Getränkemaschine, insbesondere eine Heißgetränkemaschine, mit einer Auslaufvorrichtung und einer Vorrichtung zur Auslaufhöhenverstellung der Auslaufvorrichtung, mit einer Geradführung, an welcher die Auslaufvorrichtung verschiebbar an der Getränkemaschine angeordnet ist, und mit einem Antrieb, mit dem die Auslaufvorrichtung in einer Bewegungsrichtung bewegbar ist, wobei sich die Getränkemaschine derart auszeichnet, dass die Bewegung der Auslaufvorrichtung durch einen Bediener manuell initiierbar, fortführbar und beendbar ist, wobei der Antrieb die Bewegung der Auslaufvorrichtung unterstützt.

Durch die Erfindung wird das Risiko einer Fehlbedienung im Vergleich zu automatisch arbeitenden Verstellsystemen in vorteilhafter Weise signifikant reduziert ist bzw. nahezu ausgeschlossen ist, da der Verstellvorgang durch den Bediener selbst gestartet, verfolgt und beendet wird und der Verstellvorgang von einem Antrieb unterstützt wird.

Durch die vorteilhafte geometrische Gestaltung des Gehäuses der Auslaufvorrichtung in Form eines manuell greifbaren und betätigbaren Geometrieelements, wie z.B. ein Gehäusevorsprung, wird dem Bediener eine sinnfällige und intuitive Bedienung der Auslaufhöhen-Verstellvorrichtung ermöglicht.

In einer Ausführungsvariante der vorliegenden Erfindung wird in besonders vorteilhafter Weise ein Bewegungssensor, über den die Verstellrichtung der Auslaufhöhen-Verstellvorrichtung ermittelt wird, in das manuell greifbares und betätigbares Geometrieelement integriert.

Die Erfindung löst die Aufgabe zudem durch den Gegenstand des Anspruchs 2 und schafft das Verfahren nach Anspruch 11.

Geschaffen wird demnach eine Getränkemaschine, insbesondere eine Heißgetränkemaschine, mit einer Auslaufvorrichtung und einem Abstellelement, auf dem ein Gefäß abgestellt werden kann, sowie einer Vorrichtung zur Höhenverstellung des Abstellelements, mit einer Geradführung, an welcher das Abstellelement verschiebbar an der Getränkemaschine angeordnet ist, und mit einem Antrieb, mit dem das Abstellelement in einer Bewegungsrichtung bewegbar ist, wobei sich die Getränkemaschine derart auszeichnet, dass die Bewegung des Abstellelements durch einen Bediener manuell initiierbar, fortführbar und beendbar ist, wobei der Antrieb die Bewegung des Abstellelements unterstützt.

Hieran ist die intuitive Bedienung besonders vorteilhaft. In diesem Fall wird also der Abstand zwischen der Auslaufvorrichtung und einem Gefäß, dass ein Getränk aufnehmen soll, sinnfällig und intuitiv dadurch verändert, in dem der Gefäßrand in die Nähe der an einer fixen Position am Gehäuse einer Getränkemaschine befindlichen Auslaufvorrichtung gebracht wird.

Dies wird in vorteilhafter Weise dadurch erreicht, dass die Bewegung eines Abstellelementes, auf dem das Gefäß zur Befüllung abgestellt ist, durch einen Bediener manuell initiierbar, fortführbar und beendbar ist, wobei ein Antrieb die Bewegung des Abstellelementes unterstützt.

"...Manuell initiierbar, fortführbar und beendbar, wobei der Antrieb die Bewegung der Auslaufvorrichtung unterstützt." bedeutet insbesondere eine Auslegung der Getränkemaschine derart, dass ein Bediener der Getränkemaschine die Bewegung der Auslaufvorrichtung und / oder des Abstellelements durch Berührung eines Geometrieelements bzw. eines Sensors manuell inititiert bzw. starten kann und startet, durch kontinuierliches Berühren des Geometrieelements bzw. des Sensors in der gewünschte Bewegungsrichtung die Bewegung der Auslaufvorrichtung und / oder des Abstellelements manuell fortführt und durch Loslassen des Geometrieelements bzw. des Sensors die Bewegung der Auslaufvorrichtung und / oder des Abstellelements manuell beendet, wobei die manuelle Bewegung der Auslaufvorrichtung und / oder des Abstellelements durch einen Antrieb unterstützt wird oder allein durch den Antrieb erfolgt. Unterstützt bedeutet, dass der Bediener einen Teil der Kraft zum Bewegen aufbringt und dass der übrige Teil vom Motor aufgebracht wird. Denkbar ist es aber auch, dass die Bewegung durch den Motor erfolgt, der Benutzer aber während der Bewegung in der gewünschten Richtung über die gesamte Zeit der Bewegung oder einen Teil der Bewegung diese mit vollführt. Der Sensor sensiert dann die Berührung oder Bewegung und der Motor führt die Bewegung ganz oder kraftunterstützend durch.

Nach Anspruch 11 wird folgendes Verfahren geschaffen: Ein Verfahren zu Höhenverstellung der Auslaufvorrichtung und / oder des Abstellelements der Getränkemaschine nach einem der auf diese bezogenen Ansprüche, mit folgenden Verfahrensschritten: Bereitstellen der Getränkemaschine; Berühren des Geometrieelementes durch einen Bediener; Initiieren einer Bewegung der Auslaufvorrichtung und / oder des Abstellelements durch den Bediener in einer gewünschte Richtung, in dem der Bediener durch entsprechend gerichtetes Berühren des Geometrieelements eine vertikal nach oben bzw. nach unten gerichtete Kraft auf das Geometrieelement ausübt; Sensieren der Bewegung bzw. der gerichteten Kraft durch einen Sensor; Auswerten der Sensordaten durch eine Steuerung und Festlegen einer erforderlichen Bewegungsrichtung des Antriebs durch die Steuerung auf Grund der Sensordatenauswertung zum Unterstützen der Bewegung der Auslaufvorrichtung und / oder des Abstellelements; und Unterstützen der Bewegung der Auslaufvorrichtung und / oder des Abstellelements durch den Antrieb. Ergänzt wird dies durch Beenden der Bewegung der Auslaufvorrichtung und / oder des Abstellelements durch den Bediener, in dem der Bediener das Berühren bzw. das Bewegen des Geometrieelements beendet. Alternativ ist es auch denkbar, dass das Beenden nach Erreichen vorgegebener Zeit- oder Geometriepunkte an der Maschine erfolgt

Gegenüber automatisch arbeitenden Verstellsystemen entfällt durch die Erfindung in vorteilhafterweise eine aufwendige und damit kostenintensive Sensorik, die in automatischen Verstellsystemen unter anderem zur Kollisionserkennung erforderlich ist, darüber hinaus auf unterschiedliche Gefäßgeometrien und -werkstoffe abgestimmt werden muss, sowie für die das Problem von Verschmutzung und / oder technischem Defekt besteht.

Darüber hinaus ist es von Vorteil, dass durch die Erfindung keine besonderen Maßnahmen hinsichtlich einer programmierten Kombinatorik bzw. Zuordnung von bestimmten Gefäßen zu bestimmten Getränken erforderlich sind. Dadurch entfällt bei der vorliegenden Erfindung in vorteilhafter Weise eine bei automatisch arbeitenden Verstellsystemen erforderliche Zuordnung und damit der damit verbundene Programmier- bzw. Einstellaufwand bei der Erstinbetriebnahme einer entsprechenden Getränkemaschine vor Ort.

Weitere vorteilhafte Ausführungen der Erfindung sind den Unteransprüchen zu entnehmen.

Ausführungsbeispiele des erfindungsgemäßen Gegenstandes sind in der Zeichnung dargestellt und werden im Folgenden näher beschrieben. Es zeigen:
- Figur 1:: eine schematische Ansicht einer erfindungsgemäßen Ausführungsvariante einer Vorrichtung zur Auslaufhöhenverstellung für Heißgetränkemaschinen;
- Figur 2:: eine schematische Ansicht einer weiteren erfindungsgemäßen Ausführungsvariante einer Vorrichtung zur Auslaufhöhenverstellung für Heißgetränkemaschinen.

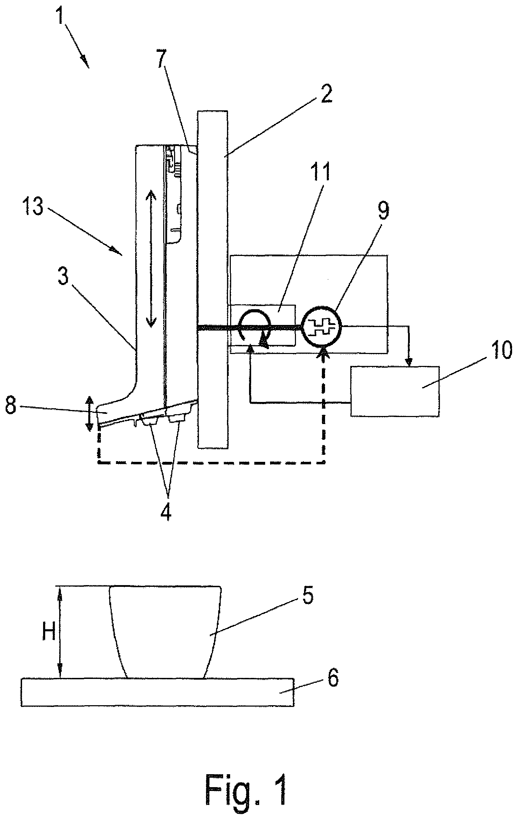

In Fig. 1 ist eine Vorrichtung zur Auslaufhöhenverstellung 13 für eine Getränkemaschine 1, insbesondere eine Heißgetränkemaschine -wie z.B. ein Kaffeevollautomatdargestellt. Die Getränkemaschine weist ein Gehäuse 2 auf. Die Bedienseite der Getränkemaschine 1 weist eine Auslaufvorrichtung 3 auf. Die Auslaufvorrichtung 3 weist eine oder mehrere Auslassdüse(n) 4 für Getränke auf, deren Öffnung in Schwerkraftwirkung gerichtet ist. Unter die Auslaufvorrichtung 3 kann ein Gefäß 5 -wie z.B. eine Tasse- auf einem Abstellelement 6 platziert werden, der das von der Getränkemaschine 1 zubereitete Getränk aufnimmt, bzw. in dem das zubereitete Getränk abgefüllt wird.

Um Gefäße 5 mit unterschiedlicher Höhe "H" unter die Auslaufvorrichtung 3 platzieren zu können, ist die Auslaufvorrichtung 3 in vertikaler Richtung relativ zum Gehäuse 2 der Getränkemaschine 1 verschiebbar in einer Geradführung 7 bzw. in einer Schlittenführung geführt. Die Auslaufvorrichtung 3 weist zudem ein Gehäuse auf. Die Auslaufvorrichtung 3 weist ferner ein einem Bediener der Getränkemaschine 1 zugewandtes manuell greifbares und betätigbares Geometrieelement 8 auf, das ein manuelles vertikales Verschieben der Auslaufvorrichtung 3 durch den Bediener der Getränkemaschine 1 erlaubt. Das Geometrieelement 8 ist hier -rein beispielhaft- als dem Bediener zugewandter Vorsprung des Gehäuses der Auslaufvorrichtung 3 ausgefü h rt.

Vorteilhafterweise ist vorgesehen, dass die Bewegung der Auslaufvorrichtung 3 über einen manuellen händisch erzeugten Impuls geschieht, wobei dieser manuell aufgebrachte Bewegungsimpuls der Auslaufvorrichtung 3 durch einen geeigneten Sensor 9 erkannt wird. Der Impuls wird dabei durch den Bediener in das Geometrieelement 8, alternativ auf eine in das Geometrieelement 8 integrierte Schaltwippe (nicht dargestellt) eingeleitet.

Der Sensor 9 steht in Wirkverbindung mit einer Steuerung 10, der die Wirkrichtung des manuellen Bewegungsimpulses der Auslaufvorrichtung 3 auswertet und einen Antrieb 11 -hier beispielhaft durch einen Motor und ein Getriebe (nicht dargestellt) gebildet- aktiviert, der die Auslaufvorrichtung 3 in die vom Bediener gewünschte Bewegungsrichtung bewegt.

In der in Fig. 1 dargestellten Ausführungsvariante ist der Sensor 9 ein Inkrementalgeber, der in Wirkverbindung mit dem Antrieb 11 steht. Durch das vertikale Verschieben der Auslaufvorrichtung 3 über einen manuellen bzw. durch den Bediener händisch erzeugten Impuls wird die gewünschte Bewegungsrichtung über das Getriebe (nicht dargestellt) auf den Motor und schließlich auf den mit dem Motor in Wirkverbindung stehenden Inkrementalgeber 9 übertragen, wodurch sich die Welle des Inkrementalgebers 9 um einen diskreten Drehwinkel in der jeweiligen Bewegungsrichtung weiterdreht.

Diese Drehwinkelveränderung des Inkrementalgebers 9 wird von der Steuerung 10 ausgewertet. Die Steuerung 10 erzeugt auf Grund der Drehrichtung der Drehwinkelveränderung ein entsprechendes Signal, so dass der Motor die Auslaufvorrichtung 3 über das Getriebe in der vom Bediener gewünschten Bewegungsrichtung vertikal verschiebt und zwar so lange, wie durch den Bediener ein entsprechender manuell bzw. händisch erzeugter Impuls über das Geometrieelement 8 auf die Auslaufvorrichtung 3 ausgeübt wird.

Insofern wird die vertikale Bewegung der Auslaufvorrichtung 3 in vorteilhafter Weise durch den Bediener initiiert, fortgeführt bzw. kontrolliert und beendet, wobei der Antrieb die vertikale Bewegung der Auslaufvorrichtung 3 unterstützt und damit erleichtert.

Der Betätigungsimpuls wirkt also auf einen Sensor 9, der ein entsprechendes Signal an die Steuerung 10 weitergibt, wobei die Steuerung 10 das Signal auswertet und einen dem Betätigungsimpuls entsprechenden Steuerimpuls an den Antrieb 11 weitergibt, durch den der Antrieb die Auslaufvorrichtung 3 analog zum Betätigungsimpuls bewegt.

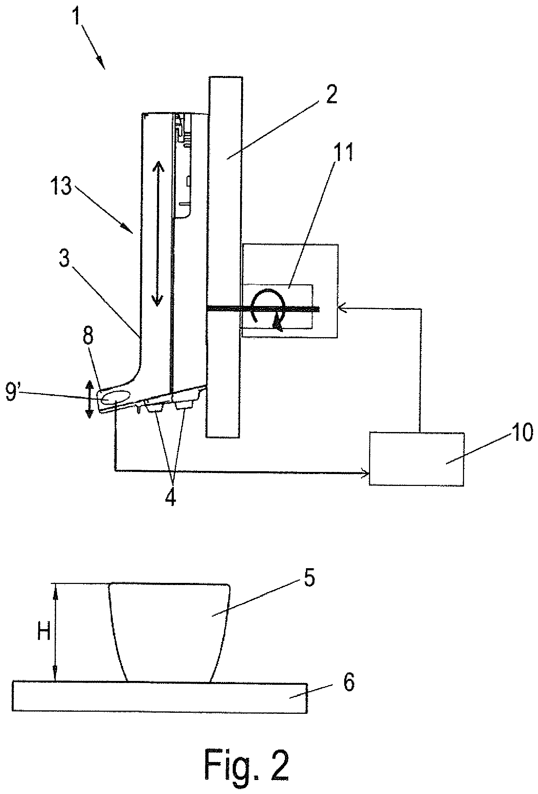

In Fig. 2 ist eine Ausführungsvariante einer Vorrichtung zur Auslaufhöhenverstellung 13 für eine Heißgetränkemaschine 1 dargestellt. Um Wiederholungen zu vermeiden, werden lediglich Unterschiede und Abweichungen zu der in Fig. 1 gezeigten Vorrichtung 13 beschrieben.

Abweichend zu der in Fig. 1 dargestellten Ausführungsvariante der vorliegenden Erfindung ist der Sensor 9' als Berührungssensor ausgeführt. Die Position der Berührung des Sensors 9' durch den Bediener wird durch die Steuerung 10 ausgewertet. Je nach der Berührungsposition am Sensor 9' und dem damit einhergehenden durch den Bediener manuell bzw. händisch erzeugten Bewegungsimpuls wird die Auslaufvorrichtung 3 vom Antrieb11 in der gewünschten Bewegungsrichtung vertikal verschoben.

Dies geschieht solange, wie durch den Bediener ein entsprechender manuell bzw. händisch erzeugter Impuls über den Sensor 9' auf die Auslaufvorrichtung 3 ausgeübt wird.

Insofern wird die vertikale Bewegung der Auslaufvorrichtung 3 in vorteilhafter Weise durch den Bediener initiiert, fortgeführt bzw. kontrolliert und beendet, wobei der Antrieb die vertikale Bewegung der Auslaufvorrichtung 3 unterstützt und damit erleichtert.

Alternativ kann analog zu beiden Ausführungsvarianten auch das Abstellelement 6 durch eine Vorrichtung zur Höhenverstellung 13' (nicht dargestellt) höhenverstellt werden. Die Auslaufvorrichtung 3 bleibt in einem solchen Fall in einer fixen Position am Gehäuse 2 der Getränkemaschine 1 und ist nicht vertikal verstellbar. Ebenfalls weist das Abstellelement 6 in dem Fall ein einem Bediener der Getränkemaschine 1 zugewandtes manuell greifbares und betätigbares Geometrieelement (nicht dargestellt) auf, das ein manuelles vertikales Verschieben des Abstellelements 6 durch den Bediener der Getränkemaschine 1 erlaubt.

Analog zur Ausführungsvariante der vorliegenden Erfindung nach Fig. 2 ist der Sensor 9' im Fall eines vertikal verstellbaren Abstellelementes 6 als Berührungssensor ausgeführt. Die Position der Berührung des Sensors (hier)nicht dargestellt) durch den Bediener wird durch die Steuerung 10 ausgewertet. Je nach der Berührungsposition am Sensor und dem damit einhergehenden durch den Bediener manuell bzw. händisch erzeugten Bewegungsimpuls wird das Abstellelement 6 vom Antrieb 11 in der gewünschten Bewegungsrichtung vertikal verschoben.

Dies geschieht solange, wie durch den Bediener ein entsprechender manuell bzw. händisch erzeugter Impuls über den Sensor auf das Abstellelement 6 ausgeübt wird.

Insofern wird in dem Fall die vertikale Bewegung des Abstellelements 6 in vorteilhafter Weise durch den Bediener initiiert, fortgeführt bzw. kontrolliert und beendet, wobei der Antrieb 11 die vertikale Bewegung des Abstellelements 6 unterstützt und damit erleichtert.

Denkbar ist ebenfalls, dass sowohl die Auslaufvorrichtung 3 als auch das Abstellelement 6 im Sinne der Erfindung höhenverstellbar ist.

Für die Höhenverstellung der Auslaufvorrichtung 3 und / oder des Abstellelements 6 der Getränkemaschine 1 wird folgendes Verfahren angegeben:
Zunächst wird die Getränkemaschine 1 bereitgestellt.

In einem darauf folgenden Verfahrensschritt wird das Geometrieelementes 8, durch einen Bediener berührt.

Dadurch wird in einem weiteren Verfahrensschritt eine Bewegung der Auslaufvorrichtung 3 und / oder des Abstellelements 6 durch den Bediener in einer gewünschte Richtung initiiert, in dem der Bediener durch entsprechend gerichtetes Berühren des Geometrieelements 8, eine vertikal nach oben bzw. nach unten gerichtete Kraft auf das Geometrieelement 8, ausübt;

In einen darauf folgenden Verfahrensschritt wird die Bewegung bzw. die gerichtete Kraft durch einen Sensor 9, 9' sensiert.

In einem weiteren Verfahrensschritt werden die Sensordaten durch eine Steuerung 10 ausgewertet und eine erforderlichen Bewegungsrichtung des Antriebs 11 durch die Steuerung 10 auf Grund der Sensordatenauswertung zum Unterstützen der Bewegung der Auslaufvorrichtung 3 und / oder des Abstellelements 6 festgelegt.

In einem weiteren Verfahrensschritt wird die Bewegung der Auslaufvorrichtung 3 und / oder des Abstellelements 6 durch den Antrieb 11 unterstützt.

In einem abschließenden Verfahrensschritt wird die Bewegung der Auslaufvorrichtung 3 und / oder des Abstellelements 6 durch den Bediener beendet, in dem der Bediener das Berühren bzw. das Bewegen des Geometrieelements 8, beendet.

### Bezugszeichenliste

- 1: Getränkemaschine
- 2: Gehäuse
- 3: Auslaufvorrichtung
- 4: Auslassdüse
- 5: Gefäß
- 6: Abstellelement
- 7: Geradführung
- 8: Geometrieelement
- 9, 9',: Sensor
- 10: Steuerung
- 11: Antrieb
- 13: Vorrichtung zur Auslaufhöhenverstellung
- 13': Vorrichtung zur Höhenverstellung

- H: Höhe

## Patentansprüche

1. Getränkemaschine (1), insbesondere Heißgetränkemaschine, mit
a. einer Auslaufvorrichtung (3) und
b. einer Vorrichtung zur Auslaufhöhenverstellung (13) der Auslaufvorrichtung (3),
i. mit einer Geradführung (7), an welcher die Auslaufvorrichtung (3) verschiebbar an der Getränkemaschine (1) angeordnet ist, und
ii. mit einem Antrieb (11), mit dem die Auslaufvorrichtung (3) in einer Bewegungsrichtung bewegbar ist,
**gekennzeichnet durch**
eine Auslegung derart, dass die Bewegung der Auslaufvorrichtung (3) durch einen Bediener manuell initiierbar, fortführbar und beendbar ist, wobei der Antrieb (11) dazu ausgelegt ist, die Bewegung der Auslaufvorrichtung (3) zu unterstützen, derart, dass ein Bediener der Getränkemaschine (1) die Bewegung der Auslaufvorrichtung (3) durch Berührung eines Geometrieelements (8) und / oder eines Sensors (9, 9') manuell inititiert und / oder starten kann und startet, durch kontinuierliches Berühren des Geometrieelements (8) und / oder des Sensors (9, 9') in der gewünschte Bewegungsrichtung die Bewegung der Auslaufvorrichtung (3) manuell fortführt und durch Loslassen des Geometrieelements (8) und / oder des Sensors (9, 9') die Bewegung der Auslaufvorrichtung (3) manuell beendet, wobei die manuelle Bewegung der Auslaufvorrichtung (3) durch einen Antrieb (11) unterstützt wird oder allein durch den Antrieb (11) erfolgt,
wobei der Bediener einen Teil der Kraft zum Bewegen aufbringt und der übrige Teil von einem Motor (12) des Antriebs (11) aufgebracht wird oder wobei die Bewegung durch einen Motor (12) des Antriebs (11) erfolgt, der Benutzer aber während der Bewegung in der gewünschten Richtung über die gesamte Zeit der Bewegung oder einen Teil der Bewegung diese mit vollführt, derart dass der Sensor(9, 9') dann die Berührung oder Bewegung sensiert und der Motor (12) die Bewegung ganz oder kraftunterstützend durchführt.

2. Getränkemaschine (1), insbesondere Heißgetränkemaschine, mit
a. einer Auslaufvorrichtung (3) und einem Abstellelement (6), auf dem ein Gefäß abgestellt werden kann,
b. einer Vorrichtung zur Höhenverstellung (13') des Abstellelements (6),
iii. mit einer Geradführung (7), an welcher das Abstellelement (6) verschiebbar an der Getränkemaschine (1) angeordnet ist, und
iv. mit einem Antrieb (11), mit dem das Abstellelement (6) in einer Bewegungsrichtung bewegbar ist,
**gekennzeichnet durch**
eine Auslegung derart, dass die Bewegung des Abstellelements (6) durch einen Bediener manuell initiierbar, fortführbar und beendbar ist, wobei der Antrieb (11) dazu ausgelegt ist, die Bewegung des Abstellelements (6) zu unterstützen derart, dass ein Bediener der Getränkemaschine (1) die Bewegung des Abstellelements (6) durch Berührung eines Geometrieelements (8) und / oder eines Sensors (9, 9') manuell inititiert und / oder starten kann und startet, durch kontinuierliches Berühren des Geometrieelements (8) und / oder des Sensors (9, 9') in der gewünschte Bewegungsrichtung die Bewegung des Abstellelements (6) manuell fortführt und durch Loslassen des Geometrieelements (8) und / oder des Sensors (9, 9') die Bewegung des Abstellelements (6) manuell beendet, wobei die manuelle Bewegung des Abstellelements (6) durch einen Antrieb (11) unterstützt wird oder allein durch den Antrieb (11) erfolgt,
wobei der Bediener einen Teil der Kraft zum Bewegen aufbringt und der übrige Teil von einem Motor (12) des Antriebs (11) aufgebracht wird oder wobei die Bewegung durch einen Motor (12) des Antriebs (11) erfolgt, der Benutzer aber während der Bewegung in der gewünschten Richtung über die gesamte Zeit der Bewegung oder einen Teil der Bewegung diese mit vollführt, derart dass der Sensor (9, 9') dann die Berührung oder Bewegung sensiert und der Motor (12) die Bewegung ganz oder kraftunterstützend durchführt.

3. Getränkemaschine (1) nach Anspruch 1 oder 2, **dadurch gekennzeichnet, dass** das Geometrieelement (8) der Auslassvorrichtung (3) und / oder des Abstellelements (6) als ein manuell greifbares und betätigbares Geometrieelement (8) ausgebildet ist.

4. Getränkemaschine (1) nach einem der vorgenannten Ansprüche, **dadurch gekennzeichnet, dass** über das Geometrieelement (8) das vertikale Verschieben der Auslaufvorrichtung (3) und / oder des Abstellelements (6) über einen händisch erzeugten Impuls durch den Bediener erfolgt.

5. Getränkemaschine (1) nach einem der vorgenannten Ansprüche, **dadurch gekennzeichnet, dass** der manuell aufgebrachte Bewegungsimpuls der Auslaufvorrichtung (3) und / oder des Abstellelements (6) durch den Sensor (9, 9') erkennbar ist.

6. Getränkemaschine (1) nach einem der vorgenannten Ansprüche, **dadurch gekennzeichnet, dass** der Sensor (9) ein Inkrementalgeber ist.

7. Getränkemaschine (1) nach einem der vorgenannten Ansprüche, **dadurch gekennzeichnet, dass** der Sensor (9') ein Berührungssensor ist.

8. Getränkemaschine (1) nach einem der vorgenannten Ansprüche, **dadurch gekennzeichnet, dass** die Vorrichtung (13, 13') eine Steuerung (10) aufweist, der bzw. die mit dem Antrieb (11) und dem Sensor (9, 9') in Wirkzusammenhang steht.

9. Getränkemaschine (1) nach einem der vorgenannten Ansprüche, **dadurch gekennzeichnet, dass** der Antrieb (11) aus dem Motor (12) und einem Getriebe gebildet ist.

10. Getränkemaschine (2) nach einem der vorgenannten Ansprüche, **dadurch gekennzeichnet, dass** die Getränkemaschine (2) ein Kaffeevollautomat ist.

11. Verfahren zu Höhenverstellung der Auslaufvorrichtung (3) und / oder des Abstellelements (6) der Getränkemaschine (1) nach einem der vorgenannten Ansprüche, **gekennzeichnet durch** folgende Verfahrensschritte:
a) Bereitstellen der Getränkemaschine (1);
b) Berühren des Geometrieelementes (8,) durch einen Bediener
c) Initiieren einer Bewegung der Auslaufvorrichtung (3) und / oder des Abstellelements (6) durch den Bediener in einer gewünschte Richtung, in dem der Bediener durch entsprechend gerichtetes Berühren des Geometrieelements (8,) eine vertikal nach oben bzw. nach unten gerichtete Kraft auf das Geometrieelement (8,) ausübt;
d) Sensieren der Bewegung bzw. der gerichteten Kraft durch einen Sensor (9, 9');
e) Auswerten der Sensordaten durch eine Steuerung (10) und Festlegen einer erforderlichen Bewegungsrichtung des Antriebs (11) durch die Steuerung (10) auf Grund der Sensordatenauswertung zum Unterstützen der Bewegung der Auslaufvorrichtung (3) und / oder des Abstellelements (6);
f) Unterstützen der Bewegung der Auslaufvorrichtung (3) und / oder des Abstellelements (6) durch den Antrieb (11),
derart dass ein Bediener der Getränkemaschine (1) die Bewegung der Auslaufvorrichtung (3) und / oder des Abstellelements (6) durch Berührung eines Geometrieelements (8) und / oder des Sensors (9) manuell inititiert und / oder starten kann und startet, durch kontinuierliches Berühren des Geometrieelements (8) und / oder des Sensors (9) in der gewünschte Bewegungsrichtung die Bewegung der Auslaufvorrichtung (3) und / oder des Abstellelements (6) manuell fortführt und durch Loslassen des Geometrieelements (8) und / oder des Sensors (9) die Bewegung der Auslaufvorrichtung (3) und / oder des Abstellelements (6) manuell beendet, wobei die manuelle Bewegung der Auslaufvorrichtung (3) und / oder des Abstellelements (6) durch einen Antrieb (11) unterstützt wird oder allein durch den Antrieb (11) erfolgt, wobei der Bediener einen Teil der Kraft zum Bewegen aufbringt und der übrige Teil von einem Motor (12) des Antriebs (11) aufgebracht wird oder wobei die Bewegung durch einen Motor (12) des Antriebs (11) erfolgt, der Benutzer aber während der Bewegung in der gewünschten Richtung über die gesamte Zeit der Bewegung oder einen Teil der Bewegung diese mit vollführt, derart dass der Sensor (9) dann die Berührung oder Bewegung sensiert und der Motor (12) die Bewegung ganz oder kraftunterstützend durchführt.

12. Verfahren nach Anspruch 11, **gekennzeichnet durch** folgenden abschließenden Verfahrensschritt:
g) Beenden der Bewegung der Auslaufvorrichtung (3) und / oder des Abstellelements (6) durch den Bediener, in dem der Bediener das Berühren bzw. das Bewegen des Geometrieelements (8,) beendet.

## Claims

1. Drinks machine (1), particularly hot drinks machine, with
a. an outlet device (3) and
b. a device for outlet height adjustment (13) of the outlet device (3),
i. with a straight guide (7) at which the outlet device (3) is arranged at the drinks machine (1) to be displaceable, and
ii. with a drive (11) by which the outlet device (3) is movable in a movement direction,
**characterised by**
a configuration of such a kind that the movement of the outlet device (3) can be manually initiated, continued and ended by a user, wherein the drive (11) is designed for the purpose of assisting the movement of the outlet device (3) in such a way that a user of the drinks machine (1) manually initiates and/or can start and starts the movement of the outlet device (3) by contacting a geometry element (8) and/or a sensor (9, 9'), manually continues the movement of the outlet device (3) by continuous contact with the geometry element (8) and/or the sensor (9, 9') in the desired movement direction and manually ends the movement of the outlet device (3) by releasing the geometry element (8) and/or the sensor (9, 9'), wherein the manual movement of the outlet device (3) is assisted by a drive (11) or takes place solely by the drive (11),
wherein the user applies a part of the force for the movement and the remaining part is applied by a motor (12) of the drive (11) or wherein the movement is carried out by a motor (12) of the drive (11), but the user during the movement in the desired direction performs this conjunctively over the entire time of the movement or over a part of the movement in such a way that the sensor (9, 9') then senses the contact or movement and the motor (12) performs the movement entirely or with assisting force.

2. Drinks machine (1), particularly hot drinks machine, with
a. an outlet device (3) and a deposit element (6), on which a vessel can be deposited, and
b. a device for outlet height adjustment (13) of the deposit element (6),
iii. with a straight guide (7) at which the deposit element (6) is arranged at the drinks machine (1) to be displaceable, and
iv. with a drive (11) by which the deposit element (6) is movable in a movement direction,
**characterised by**
a configuration of such a kind that the movement of the deposit element (6) can be manually initiated, continued and ended by a user, wherein the drive (11) is designed for the purpose of assisting the movement of the deposit element (6) in such a way that a user of the drinks machine (1) manually initiates and/or can start and starts the movement of the deposit element (6) by contacting a geometry element (8) and/or a sensor (9, 9'), manually continues the movement of the deposit element (6) by continuous contact with the geometry element (8) and/or the sensor (9, 9') in the desired movement direction and manually ends the movement of the deposit element (6) by releasing the geometry element (8) and/or the sensor (9, 9'), wherein the manual movement of the deposit element (6) is assisted by a drive (11) or takes place solely by the drive (11),
wherein the user applies a part of the force for the movement and the remaining part is applied by a motor (12) of the drive (11) or wherein the movement is carried out by a motor (12) of the drive (11), but the user during the movement in the desired direction performs this conjunctively over the entire time of the movement or over a part of the movement in such a way that the sensor (9, 9') then senses the contact or movement and the motor (12) performs the movement entirely or with assisting force.

3. Drinks machine (1) according to claim 1 or 2, **characterised in that** the geometry element (8) of the outlet device (3) and/or of the deposit device (6) is constructed as a manually grippable and actuable geometry element (8).

4. Drinks machine (1) according to any one of the preceding claims, **characterised in that** by way of the geometry element (8) the vertical displacement of the outlet device (3) and/or of the deposit element (6) is carried out by a manually produced impulse by the user.

5. Drinks machine (1) according to any one of the preceding claims, **characterised in that** the manually applied movement impulse of the outlet device (3) and/or the deposit element (6) is recognisable by the sensor (9, 9').

6. Drinks machine (1) according to any one of the preceding claims, **characterised in that** the sensor (9) is an incremental transmitter.

7. Drinks machine (1) according to any one of the preceding claims, **characterised in that** the sensor (9') is a contact sensor.

8. Drinks machine (1) according to any one of the preceding claims, **characterised in that** the device (13, 13') comprises a control (10) disposed in operative connection with the drive (11) and the sensor (9, 9').

9. Drinks machine (1) according to any one of the preceding claims, **characterised in** the drive (11) is formed by the motor (12) and a transmission.

10. Drinks machine (2) according to any one of the preceding claims, **characterised in that** the drinks machine (2) is an automatic coffee machine.

11. Method for height adjustment of the outlet device (3) and/or of the deposit element (6) of the drinks machine (1) according to any one of the preceding claims, **characterised by** the following method steps:
a) providing the drinks machine (1);
b) contacting the geometry element (8) by a user,
c) initiating a movement of the outlet device (3) and/or of the deposit element (6) by the user in a desired direction in that the user by appropriately directed contact with the geometry element (8) exerts a vertically upwardly or downwardly directed force on the geometry element (8);
d) sensing the movement or the directed force by a sensor (9, 9');
e) evaluating the sensor data by a control (10) and determining a required direction of movement of the drive (11) by the control (10) on the basis of the sensor data evaluation for assisting the movement of the outlet device (3) and/or of the deposit element (6);
f) assisting the movement of the outlet device (3) and/or of the deposit element (6) by the drive (11) in such a way that a user manually initiates and/or can start and starts the movement of the outlet device (3) and/or of the deposit device (6) by contacting a geometry element (8) and/or the sensor (9), manually continues the movement of the outlet device (3) and/or of the deposit element (6) by continuous contact with the geometry element (8) and/or the sensor (9) in the desired movement direction and manually ends the movement of the outlet device (3) and/or of the deposit element (6) by releasing the geometry element (9) and/or the sensor (9), wherein the manual movement of the outlet device (3) and/or of the deposit element (6) is assisted by a drive (11) or carried out solely by the drive (11), wherein the user applies a part of the force for the movement and the remaining part is applied by a motor (12) of the drive (11) or wherein the movement is carried out by a motor (12) of the drive (11), but the user during the movement in the desired direction performs this conjunctively over the entire time of the movement or over a part of the movement in such a way that the sensor (9) then senses the contact or movement and the motor (12) performs the movement entirely or with assisting force.

12. Method according to claim, **characterised by** the following concluding method step:
g) ending the movement of the outlet device (3) and/or of the deposit element (6) by the user in that the user ends the contact with or movement of the geometry element (8).

## Revendications

1. Machine à boissons (1), en particulier machine à boissons chaudes comprenant :
a. un dispositif de sortie (3), et
b. un dispositif de réglage (13) de la hauteur de sortie du dispositif de sortie (3), comprenant :
i. un guidage linéaire (7) sur lequel le dispositif de sortie (3) est monté coulissant sur la machine à boissons (1), et
ii. un entraînement (11) permettant de déplacer le dispositif de sortie (3) dans une direction de déplacement,
**caractérisée par**
une configuration telle que le déplacement du dispositif de sortie (3) puisse être amorcé, poursuivi et terminé manuellement par un utilisateur, l'entraînement (11) étant réalisé pour permettre d'assister le déplacement du dispositif de sortie (3) de sorte qu'un utilisateur de la machine à boissons (1) puisse amorcer et/ou démarrer et démarre manuellement le déplacement du dispositif de sortie (3) par contact avec un élément géométrique (8) et/ou un capteur (9, 9'), poursuive manuellement le déplacement du dispositif de sortie (3) dans la direction souhaitée par contact continu avec l'élément géométrique (8) et/ou le capteur (9, 9'), et termine manuellement le déplacement du dispositif de sortie (3) par libération de l'élément géométrique (8) et/ou du capteur (9, 9'), le déplacement manuel du dispositif de sortie (3) étant assisté par l'entraînement (11), ou n'étant mis en oeuvre que par l'entraînement (11),
l'utilisateur exerçant une partie de la force permettant le déplacement, et la partie restante étant exercée par un moteur (12) de l'entraînement (11), ou le déplacement étant mis en oeuvre par le moteur (12) de l'entraînement (11), mais, pendant le déplacement dans la direction souhaitée, l'utilisateur accompagnant celui-ci pendant la totalité de sa durée ou une partie de celle-ci, de sorte que le capteur (9, 9') détecte alors le contact ou le déplacement et que le moteur (12) mette en oeuvre le déplacement totalement ou en l'assistant par la force.

2. Machine à boissons (1), en particulier machine à boissons chaudes comprenant :
a. un dispositif de sortie (3) et un élément de dépôt (6) sur lequel peut être déposé un récipient,
b. un dispositif de réglage en hauteur (13') de l'élément de dépôt (6) comprenant :
iii. un guidage linéaire (7) sur lequel l'élément de dépôt (6) est monté coulissant sur la machine à boissons (1), et
iv. un entraînement (11) permettant de déplacer l'élément de dépôt (6) dans une direction de déplacement,
**caractérisé par**
une configuration telle que le déplacement de l'élément de dépôt (6) puisse être amorcé, poursuivi et terminé manuellement par un utilisateur, l'entraînement (11) étant réalisé pour permettre d'assister le déplacement de l'élément de dépôt (6) de sorte qu'un utilisateur de la machine à boissons (1) puisse amorcer et/ou démarrer et démarre manuellement le déplacement de l'élément de dépôt (6) par contact avec un élément géométrique (8) et/ou un capteur (9, 9'), poursuive manuellement le déplacement de l'élément de dépôt (6) dans la direction souhaitée par contact continu avec l'élément géométrique (8) et/ou le capteur (9, 9'), et termine manuellement le déplacement de l'élément de dépôt (8) par libération de l'élément géométrique (8) et/ou du capteur (9, 9'), le déplacement manuel de l'élément de dépôt (6) étant assisté par l'entraînement (11) ou n'étant mis en oeuvre que par l'entraînement (11), l'utilisateur exerçant une partie de la force permettant le déplacement et la partie restante étant exercée par un moteur (12) de l'entraînement (11), ou le déplacement étant mis en oeuvre par le moteur (12) de l'entraînement, mais, pendant le déplacement dans la direction souhaitée, l'utilisateur accompagnant celui-ci pendant la totalité de sa durée ou une partie de celle-ci de sorte que le capteur (9, 9') détecte alors le contact ou le déplacement et que le moteur (12) mette en oeuvre le déplacement totalement ou en l'assistant par la force.

3. Machine à boissons (1) conforme à la revendication 1 ou 2,
**caractérisée en ce que**
l'élément géométrique (8) du dispositif de sortie (3) et/ou de l'élément de dépôt (6) est réalisé sous la forme d'un élément géométrique (8) pouvant être saisi et actionné manuellement.

4. Machine à boissons (1) conforme à l'une des revendications précédentes,
**caractérisée en ce que**
le coulissement vertical du dispositif de sortie (3) et/ou de l'élément de dépôt (6) par l'intermédiaire de l'élément géométrique (8) est actionné par une impulsion produite manuellement par l'utilisateur.

5. Machine à boissons (1) conforme à l'une des revendications précédentes,
**caractérisée en ce que**
l'impulsion de déplacement produite manuellement du dispositif de sortie (3) et/ou de l'élément de dépôt (6) est identifiable par le capteur (9, 9').

6. Machine à boissons (1) conforme à l'une des revendications précédentes,
**caractérisée en ce que**
le capteur (9) est un émetteur incrémentiel.

7. Machine à boissons (1) conforme à l'une des revendications précédentes,
**caractérisée en ce que**
le capteur (9') est un capteur de proximité.

8. Machine à boissons (1) conforme à l'une des revendications précédentes,
**caractérisée en ce que**
le dispositif (13, 13') comporte une commande (10) qui est en liaison fonctionnelle avec l'entraînement (11) et le capteur (9, 9').

9. Machine à boissons (1) conforme à l'une des revendications précédentes,
**caractérisée en ce que**
l'entraînement (11) est constitué par le moteur (12) et une transmission.

10. Machine à boissons (2) conforme à l'une des revendications précédentes, **caractérisée en ce qu'**
elle est constituée par une machine à café automatique.

11. Procédé de réglage en hauteur du dispositif de sortie (3) et/ou de l'élément de dépôt (6) de la machine à boissons (1) conforme à l'une des revendications précédentes,
**caractérisée en ce qu'**
il comporte les étapes suivantes consistant à :
a) se procurer la machine à boissons (1),
b) contacter l'élément géométrique (8) par un utilisateur,
c) amorcer un déplacement du dispositif de sortie (3) et/ou de l'élément de dépôt (6) par l'utilisateur dans la direction souhaitée, du fait que l'utilisateur exerce, par contact dirigé de façon correspondante de l'élément géométrique (8) une force verticale dirigée vers le haut ou vers le bas sur l'élément géométrique (8),
d) détecter le déplacement et/ou la force orientée par un capteur (9, 9'),
e) exploiter les données de capteur par une commande (10) et déterminer la direction de déplacement nécessaire de l'entraînement (11) par la commande (10) et déterminer la direction de déplacement nécessaire de l'entraînement (11) par la commande (10) sur le fondement de l'exploitation des données de capteur pour assister le déplacement du dispositif de sortie (3) et/ou de l'élément de dépôt (6),
f) assister le déplacement du dispositif de sortie (3) et/ou de l'élément de dépôt (6) par l'entraînement (11) de sorte qu'un utilisateur de la machine à boissons puisse amorcer et/ou démarrer manuellement et démarre le déplacement du dispositif de sortie (3) et/ou de l'élément de dépôt (6) par contact avec un élément géométrique (8) et/ou le capteur (9), poursuive manuellement le déplacement du dispositif de sortie (3) et/ou de l'élément de dépôt (6) dans la direction souhaitée par contact continu avec l'élément géométrique (8) et/ou le capteur (9), et termine manuellement le déplacement du dispositif de sortie (3) et/ou de l'élément de dépôt (6) par libération de l'élément géométrique (8) et/ou du capteur (9), le déplacement manuel du dispositif de sortie (3) et/ou de l'élément de dépôt (6) étant assisté par un entraînement (11) ou n'étant mis en oeuvre que par l'entraînement (11), l'utilisateur exerçant une partie de la force permettant le déplacement et la partie restante étant exercée par un moteur (12) de l'entraînement (11), ou le déplacement étant mis en oeuvre par le moteur (12) de l'entraînement (11), mais, pendant le déplacement dans la direction souhaitée, l'utilisateur accompagnant celui-ci dans la direction souhaitée pendant la totalité de sa durée ou une partie de celle-ci de sorte que le capteur (9) détecte ainsi le contact ou le déplacement et que le moteur (12) mette en oeuvre le déplacement totalement ou en l'assistant par la force.

12. Procédé conforme à la revendication 11,
**caractérisé par**
l'étape suivante consistant à :
g) terminer le déplacement du dispositif de sortie (3) et/ou de l'élément de dépôt (6) par l'utilisateur, du fait que l'utilisateur termine le contact ou le déplacement de l'élément géométrique (8).
